# EUROPÄISCHE PATENTANMELDUNG

(11) **EP 1 112 721 A1**
(43) Veröffentlichungstag der Anmeldung: **04.07.2001**
(21) Anmeldenummer: 00128582.4
(22) Anmeldetag: 27.12.2000
(51) Int. Cl.: A61C 1/08

(54) **Beleuchtungskörper für ein medizinisches oder dentalmedizinisches Handstück**

(30) Priorität: 29.12.1999 DE 19963706
(71) Anmelder: KALTENBACH & VOIGT GMBH & CO., 88400 Biberach (DE)
(72) Erfinder: Eibofner, Eugen, 88400 Biberach (DE); Herzhauser, Walter, 88400 Biberach-Rissegg (DE); Lingenhöle, Bernhard, 88447 Warthausen (DE)
(74) Vertreter: Schmidt-Evers, Jürgen, Dipl.-Ing.

(57) **Zusammenfassung**

Die Erfindung betrifft einen Beleuchtungskörper (18) für ein medizinisches oder dentalmedizinisches Handstück, mit einer Lampe, die mit einem Sockel (17) eine vorfertigbare Baueinheit bildet, wobei die Lampe zwei Leiterdrähte (34) aufweist, die sich an zwei einander gegenüberliegenden Außenseiten des Sockels (17) befinden. Zum Zweck der Aufrechterhaltung einer langen Lebensdauer und der Verringerung des Herstellungsaufwandes und der -kosten ist die Lampe durch eine Leuchtdiode (16; 16b) gebildet.

## Beschreibung

Die Erfindung bezieht sich auf einen Beleuchtungskörper nach dem Oberbegriff des Anspruches 1 oder 11.

Ein Beleuchtungskörper dieser Art ist in der DE 42 16 873 A beschrieben. Dieser bekannte Beleuchtungskörper ist durch eine vorgefertigte Baueinheit gebildet, bestehend aus einer Glühlampe und einem Sockel, der eine Aufnahmehülse für den Glaskörpern der Lampe und einen profilierten Steckzapfen aufweist, an dessen Außenseiten einander gegenüberliegend zwei Kontaktdrähte in jeweils einer Längsnut im Steckzapfen angeordnet sind, wobei die Kontaktdrähte auf den Grundflächen der Längsnuten aufliegen. Zur Halterung und Kontaktierung des Beleuchtungskörpers sind am Handstück zwei einander gegenüberliegend angeordnete, sich im wesentlichen axial erstreckende Federarme vorgesehen, die in die Längsnuten des Steckzapfens einfassen, gegen die Grundflächen der Längsnuten und somit auch gegen die Kontaktdrähte vorgespannt sind und dadurch eine durch ihre Elastizität vorgegebene elastisch nachgiebige bzw. schwimmende Halterung für den Beleuchtungskörper bilden, in der dieser schwingungsgedämpft aufgenommen ist. Durch diese schwimmende Halterung werden die Widerstandsdrähte der Lampe vor Schwingungen geschützt, die im Funktionsbetrieb des Handstücks, z.B. durch einen Motorbetrieb oder durch die Rotation einer Antriebswelle, hervorgerufen werden. Da der Glaskörper der Lampe eine beträchtliche Länge aufweist, und es zusätzlich einer radialen Abstützung des Glaskörpers in seinem vorderen Bereich bedarf, ist der Glaskörper durch eine Hülse gekapselt, wobei in der Hülse weitere elastische Dämpfungselemente vorgesehen sind, die radiale Schwingungsbewegungen des Glaskörpers dämpfen.

Diese bekannte Ausgestaltung hat sich als eine Lösung guter Funktion und langer Lebensdauer erwiesen, jedoch ist die bekannte Konstruktion vielgliedrig, von aufwendiger Bauweise und deshalb teuer in der Herstellung.

Der Erfindung liegt deshalb die Aufgabe zugrunde, einen Beleuchtungskörper der eingangs angegebenen Art so auszugestalten, daß bei Aufrechterhaltung einer langen Lebensdauer der Herstellungsaufwand und die Herstellungskosten verringerbar sind.

Diese Aufgabe wird durch die Merkmale des Anspruches 1 gelöst. Vorteilhafte Weiterbildungen der Erfindung sind in den Unteransprüchen beschrieben.

Beim erfindungsgemäßen Beleuchtungskörper ist die Lampe durch eine Leuchtdiode gebildet. Dies führt zu mehreren Vorteilen. Ein wesentlicher Vorteil ist der, daß eine Leuchtdiode weniger empfindlich gegen Schwingungen ist und deshalb durch Schwingungen bedingte Ausfälle der Lampe im Funktionsbetrieb vermieden sind. Dabei kann auf eine schwimmende Halterung des Beleuchtungskörpers verzichtet werden, wodurch nicht nur die Bauweise des Beleuchtungskörpers sondern auch die Bauweise des Handstücks vereinfacht und stabilisiert wird. Hiervon ist nicht nur die Halterung des Beleuchtungskörpers zwischen frei ausbiegbaren Federarmen betroffen, sondern auch die vordere radiale Dämpfung des Lampenkörpers, wobei eine Dämpfungshülse, wie sie bei der bekannten Ausgestaltung erforderlich ist, entfallen kann. Die erfindungsgemäße Ausgestaltung führt somit auch zu einer kleinen Bauweise, was insbesondere für ein dentalmedizinisches Handstück von Vorteil ist, dessen Baugröße unter Berücksichtigung der beengten Raumverhältnisse im Mundraum eines Patienten beschränkt sind.

Zur axialen Sicherung der Leuchtdiode im Sockel können die elektrischen Leiterdrähte der Leuchtdiode dadurch dienen, daß sie am Steckzapfen des Sockels stirnseitig nach innen umgebogen sind und dadurch den Steckzapfen stirnseitig hintergreifen. Zur Stabilisierung dieser formschlüssigen Halterung ist es vorteilhaft, die Leiterdrähte nach innen um mehr als 90° zu biegen bzw. umzuschlagen, nämlich in einen im Steckzapfen vorhandenen Hohlraum hinein. Zur axialen Sicherung der Leuchtdiode im Sockel kann ggf. zusätzlich der Körper der Leuchtdiode insbesondere ein Basiskörper, in der Aufnahmehülse des Sockels befestigt, insbesondere verklebt sein.

Weitere Ansprüche und der Verfahrensanspruch 10 beziehen sich auf Anpassungsmaßnahmen, die es ermöglichen, den Sockel und/oder die Leuchtdiode mit oder ohne Distanzring so auszugestalten, daß sie zueinander passen, ohne daß der Sockel spanabhebend bearbeitet werden muß, was wegen der kleinen Innenabmessung schwierig wäre.

Insbesondere für einen letzeren Anwendungsfall ist es vorteilhaft, an einer üblichen Leuchtdiode die Kontaktdrähte zu kürzen und die gekürzten Enden mittels passenden Leiterdrähten wieder zu verlängern, mit Hilfe von im Querschnitt z.B. runden Leiterdrähten insbesondere geringerer Querschnittsgröße.

Zur Anpassung von Leuchtdioden kleinerer oder verkleinerter Querschnittsgrößen an die Aufnahmehülse eines Sockels ist es vorteilhaft, den Distanzring zwischen dem Körper der Leuchtdiode und der Aufnahmehülse vorzusehen.

Zur axialen Sicherung einer Leuchtdiode am Sockel ist es vorteilhaft, nach Anspruch 11 am Sockel eine Verrastungsvorrichtung mit wenigstens einer Verrastungsnase vorzusehen, die eine Verrrastungskante an der Leuchtdiode hintergreift. Als Verrastungskante kann ein Flansch am Diodenkörper dienen, bei dem es sich um eine auf dem Markt übliche Bauweise handelt. Diese Ausgestaltung ermöglicht ein handhabungsfreundliches Montieren und Demontieren der Leuchtdiode.

Nachfolgend werden die Erfindung und weitere durch sie erzielbare Vorteile anhand von bevorzugten Ausgestaltungen und Zeichnungen näher erläutert. Es zeigen:
- Fig. 1: ein erfindungsgemäßes medizinisches, insbesondere dentalmedizinisches Behandlungsinstrument in der Seitenansicht;
- Fig. 2: einen Beleuchtungskörper einer Beleuchtungseinrichtung für das Behandlungsinstrument als separate Baueinheit im axialen Schnitt und in vergrößerter Darstellung;
- Fig. 3: den Beleuchtungskörper in der Stirnansicht von rechts;
- Fig. 4: eine handelsübliche Leuchtdiode in der Seitenansicht;
- Fig. 5: einen Beleuchtungskörper im axialen Schnitt in abgewandelter Ausgestaltung;
- Fig. 6: einen Beleuchtungskörper im axialen Schnitt in weiter abgewandelter Ausgestaltung;
- Fig. 7: einen Beleuchtungskörper im axialen Schnitt in weiter abgewandelter Ausgestaltung;
- Fig. 8: den Schnitt VIII-VIII in Fig. 7;
- Fig. 9: einen Beleuchtungskörper im axialen Schnitt in weiter abgewandelter Ausgestaltung;
- Fig. 10: den Schnitt X-X in Fig. 9;
- Fig. 11: eine Einzelheit eines Beleuchtungskörpers in weiter abgewandelter Ausgestaltung;
- Fig. 12: den Schnitt XII-XII in Fig. 11;
- Fig. 13: einen Beleuchtungskörper im axialen Schnitt in weiter abgewandelter Ausgestaltung;
- Fig. 14: den Beleuchtungskörper nach Fig. 13 in der Draufsicht.

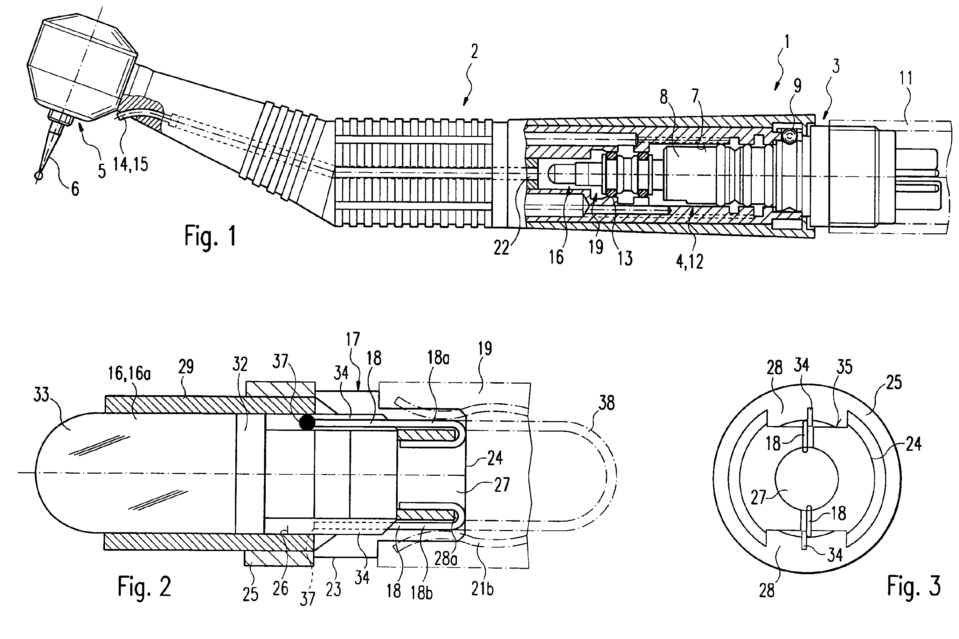

Fig. 1 zeigt ein medizinisches, insbesondere dentalmedizinisches Behandlungsinstrument 1, das aus einem vorderen Instrumententeil, nämlich einem Handstück 2 und einem hinteren Instrumententeil, nämlich einem sog. Anschlußstück 3, besteht, die durch eine Steckkupplung 4, insbesondere eine Steck/Dreh-Kupplung, lösbar miteinander verbunden sind. Am vorderen Ende des Handstücks 2 ist eine Haltevorrichtung 5 oder Spannvorrichtung für ein Werkzeug 6 angeordnet, wobei das Werkzeug 6 seitlich oder nach vorne abstehen kann. Das Handstück 2 weist an einem hinteren Ende eine koaxiale Kupplungsausnehmung 7 auf, in die ein im wesentlichen zylindrischer Kupplungszapfen 8 einsteckbar und durch an sich bekannte Verriegelungsmittel 9 lösbar verriegelbar ist. Der Kupplungszapfen 8 ragt vom Anschlußteil 3 vor, das durch eine flexible Versorgungsleitung 11 mit einem nicht dargestellten Steuergerät verbunden ist. Das Handstück 2 ist vorzugsweise auf dem Kupplungszapfen 8 frei drehbar gelagert, wodurch die Handhabbarkeit des Instruments 1 verbessert wird. Durch diese allgemein mit 12 bezeichnete Schnellkupplung erstreckt sich eine oder mehrere Medienleitungen für Wasser, Druckluft, Spray und/oder elektrischen Strom, die sich axial oder Z-förmig durch die Teilungsfuge der Steck/Dreh-Kupplung erstrecken und im Bereich der Teilungsfuge 13 mittels Dichtelementen, wie z.B. Dichtringen abgedichtet sind.

Dem Behandlungsinstrument 1 ist eine in ihrer Gesamtheit mit 14 bezeichnete Beleuchtungseinrichtung zugeordnet, mit einer im vorderen Endbereich des Handstücks angeordneten Lichtaustrittsöffnung 15, an der das Licht austritt und eine nicht dargestellte Behandlungsstelle ausleuchtet. Eine zugehörige, durch eine Leuchtdiode 16 gebildete Lampe 16a kann an der Lichtaustrittsöffnung 15 oder in einem nach hinten gerichteten Abstand davon und somit sowohl am Handstück 2 als auch am Anschlußteil 3 angeordnet sein. Im letzteren Fall wird das Licht von der Lampe 16a durch einen an sich bekannten Lichtleiter weitergeleitet, der sich bis zur Lichtaustrittsöffnung 15 erstreckt. Die Lampe 16a bildet mit einem Sockel 17 eine Baueinheit, die mit zwei Kontaktelementen 18a, 18b am Sockel 17 in eine Steckfassung 19 mit passenden Gegenkontaktelementen 21a, 21b einsteckbar ist. Beim Ausführungsbeispiel nach Fig. list die Steckfassung 19 am vorderen Ende des Kupplungszapfens 8 angeordnet, wobei im montierten Zustand die Leuchtdiode 16 in den koaxial dazu angeordneten Lichtleiter 22 strahlt.

Der Sockel 17 besteht aus einem z.B. stufenzylindrischen Basiskörper 32, der an seinem einen Stirnende einen zylindrischen Steckzapfen 24 und an seinem anderen Ende eine hohlzylindrische Aufnahmehülse 25 aufweist. Der von der Aufnahmehülse 25 umgebene Aufnahmeraum 26 erstreckt sich stufenförmig verjüngt bis zum Steckzapfen 24, der innen eine koaxiale Ausnehmung 27 oder Bohrung aufweist und außen einander gegenüberliegend zwei Längsnuten 28 rechteckförmiger Querschnittsform aufweist, die sich bis zur Aufnahmehülse 25 erstrecken können. In die Aufnahmehülse 25 ist eine diese nach vorne vorzugsweise überragende Distanzhülse 29 eingesetzt und befestigt, z.B. geklebt. In der Distanzhülse 29 ist die Leuchtdiode 16 eingesetzt, die von prinzipiell üblicher Bauweise ist und einen zylindrischen Basiskörper 32 aufweist, von dem sich nach vorne ein zylindrischer Leuchtkörper 33 aus lichtdurchlässigem Material und nach hinten zwei einen Querabstand voneinander aufweisende Leiterdrähte 34 aus Metall erstrecken, die eine etwa viereckige Querschnittsform aufweisen und sich im Aufnahmeraum 26 etwa bis zum Steckzapfen 24 erstrecken können. Im Bereich zwischen dem Steckzapfen 24 und der Aufnahmehülse 25 der Längsnuten 28 ist der Aufnahmeraum 26 durchgehend mit den Längsnuten 28 verbunden, d.h. die flache Grundfläche 35 fehlt in diesem Bereich und ist nur im Bereich des Steckzapfens 24 vorhanden. Die Leiterdrähte 34 sind durch jeweils einen Kontaktdraht 18 verlängert, der elektrisch leitend mit dem zugehörigen Leiterdraht 34 verbunden ist, sich entlang der Grundfläche 35 zum freien Ende des Steckzapfens 24 erstreckt, und radial nach innen umgebogen ist, vorzugsweise U-förmig, so daß sein freier Endbereich die Innenwandung des Steckzapfens 24 umgreift. Beim vorliegenden Ausführungsbeispiel überlappen sich die Kontaktdrähte 18 und die Leiterdrähte 34, wobei die Kontaktdrähte 18 jeweils an der Seitenfläche des zugehörigen Leiterdrahtes 34 anliegen und z.B. an ihren freien Enden mit dem Leiterdraht 34 elektrisch leitend verbunden sind, z.B. verlötet oder verschweißt sind, vorzugsweise laserverschweißt sind. Die Befestigungsstelle ist mit 37 bezeichnet. Die Kontaktdrähte 36 können auf einer Seite der Leiterdrähte 34 angeordnet sein oder auf gegenüberliegenden Seiten, wie es Fig. 3 zeigt.

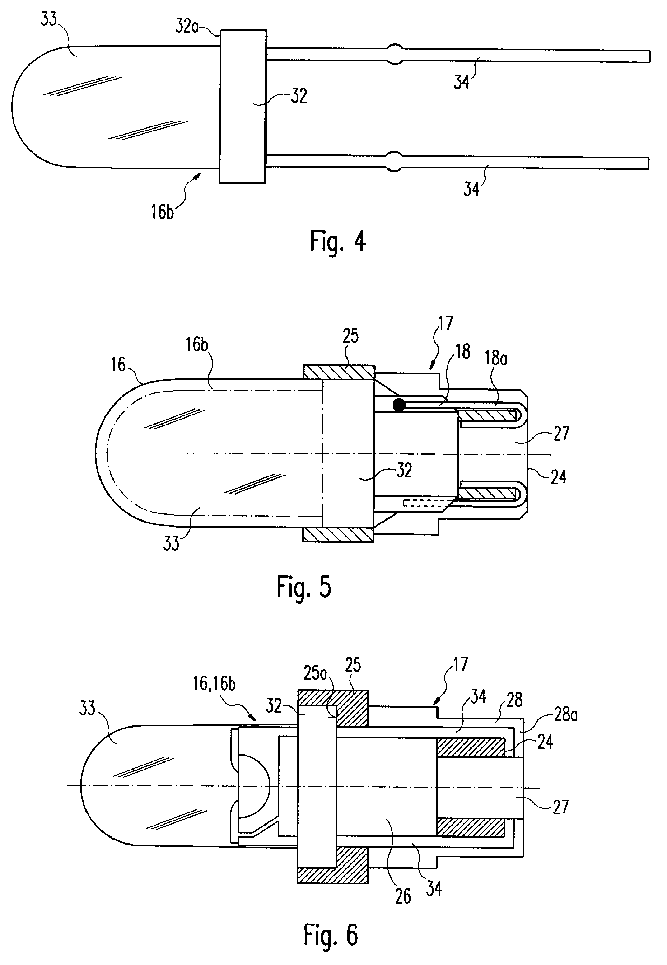

Beim Ausführungsbeispiel nach Fig. 2 sind ein Sockel 17 und eine Leuchtdiode 16 miteinander kombiniert, die nicht zusammen passen. Deshalb werden wenigsten die Leuchtdiode 16 und beim Ausführungsbeispiel nach Fig. 2 auch der Sockel 17 nach einem bestimmten Herstellungsverfahren aneinander angepaßt und montiert. Vor einer Beschreibung dieses Herstellungsverfahrens wird eine handelsübliche Sonde 16b gemäß Fig. 4 beschrieben, die sich von der Leuchtdiode 16 dadurch unterscheidet, daß der Basiskörper 32 den Leuchtkörper 33 mit einem Ringansatz 32a radial überragt und die Leiterdrähte 34 länger bemessen sind, wie es aus Fig. 4 zu entnehmen ist.

Zur Anpassung der handelsüblichen Leuchtdiode 16b werden folgende Maßnahmen durchgeführt, nämlich zum einen werden die Leiterdrähte 34 durch Abschneiden auf die vorbeschriebene Länge gekürzt und es wird der Basiskörper 32 durch spanabhebendes Abarbeiten, insbesondere Abdrehen, auf einen verringerten Durchmesser gebracht, der dem Durchmesser des Leuchtkörpers 33 entsprechen kann. Außerdem werden die gekürzten Leiterdrähte 34 durch die Kontaktdrähte 36 verlängert, die vorzugsweise seitlich an die Leiterdrähte 34 angelegt und mit diesen elektrisch leitend verbunden werden. Dabei können die Kontaktdrähte 36 durch die freien Endbereiche eines U-förmig gebogenen gemeinsamen Ausgangsdrahtes 38 aus elektrisch leitendem Material, insbesondere Kupfer, gebildet sein. Aufgrund der Einstückigkeit des Ausgangsdrahtes 38 ist die Zusammenfügung, Positionierung und Befestigung der Kontaktdrähte 36 an den Leiterdrähten 34 wesentlich vereinfacht. Nach dem Befestigen an den Befestigungsstellen 37 werden die Kontaktdrähte 36 auf eine solche Länge gekürzt, daß ihre freien Endbereiche in der Montagestellung den Steckzapfen 24 überragen.

Die so weit vorgefertigte Leuchtdiode 16 und die vorgefertige Distanzhülse 29 werden jeweils durch Einstecken montiert, wobei zunächst die Distanzhülse 29 in die Aufnahmehülse 25 oder die Leuchtdiode 16 zunächst in die Distanzhülse 29 eingesteckt werden kann. Dann werden die freien Endbereiche der Kontaktdrähte 36 um den freien Rand des Steckzapfens 24 nach innen eingebogen. Durch dieses Übergreifen ist die Leuchtdiode 16 gegen ein axiales Herausziehen aus der Distanzhülse 29 gesichert. In der entgegengesetzten Längsrichtung kann eine Positionierung der Leuchtdiode 16 in der Distanzhülse 29 dadurch erfolgen, daß die Leiterdrähte 34 axial durch den Innenrand der Steckzapfen 24 begrenzt sind.

Nachfolgend werden die Verfahrensschritte eines bevorzugten Herstellungs- und Montageverfahrens beschrieben.

Der vorzugsweise aus lichtdurchlässigem Kunststoff bestehende Leuchtdiodenkörper wird spanabhebend von seinem Ringansatz 32a durch Abdrehen befreit.

Die Leiterdrähte 34 der Leuchtdiode 16b werden auf eine vorgegebene Länge gekürzt, die durch den bereits bisher verwendeten Sockel 17 bestimmt ist.

An die gekürzten Leiterdrähte 34 werden Verlängerungen, hier die Kontaktdrähte 18 elektrisch leitend angebracht, vorzugsweise angelötet, die dünner sind als die Leiterdrähte 34, wobei vorzugsweise ein gemeinsamer Kontaktdrahtabschnitt 38 verwendet wird, der U-förmig gekrümmt ist. Dann oder zwischenzeitlich kann die Distanzhülse 29 in den Sockel 17 eingesetzt und befestigt werden, vorzugsweise durch Kleben.

Ablängen der Kontaktdrähte 34, wenn ein gemeinsamer Kontaktdraht 38 verwendet worden ist.

Die Leuchtdiode 16 wird mit den Kontaktdrähten 36 in die Distanzhülse 29 eingesteckt.

Die Kontaktdrähte 36 werden nach innen umgebogen, vorzugsweise in eine eine Innenwandung des Sockels 17 hintergreifende Position, wobei die sich in Radialnuten 28a an der Stirnseite des Sockels 17 befinden können.

Der so hergestellte Beleuchtungskörper paßt in die eingangs beschriebene bekannte Steckfassung 19, die eine schwimmende Halterung des Beleuchtungskörpers ermöglicht. Der erfindungsgemäße Beleuchtungskörper ist somit mit dem eingangs beschriebenen bekannten Beleuchtungskörper mit einer Glühlampe kompatibel. Im Rahmen der Erfindung ist es jedoch auch möglich, für den Beleuchtungskörper eine Steckfassung mit einer Steckausnehmung vorzusehen, an die der Steckzapfen 24 mit geringem Bewegungsspiel angepaßt und somit stabilisiert einsteckbar ist.

Im Rahmen der Erfindung ist es möglich, anstelle einer spanabhebenden Anpassung der Leuchtdiode 16b eine Leuchtdiode 16b zu verwenden, deren Querschnittsgröße zur Innenquerschnittsgröße der Aufnahmehülse 25 paßt oder zur Innenquerschnittsgröße einer Distanzhülse 29 paßt, deren Außenquerschnittsgröße wiederum an die Innenquerschnittsgröße der Aufnahmehülse 25 angepaßt ist.

Bei der Anordnung gemäß Fig. 5 befindet sich der Basiskörpers 32 bezüglich der Längsrichtung vollständig in der Aufnahmehülse 25.

Beim Ausführungsbeispiel nach Fig. 6 ist eine handelsübliche Leuchtdiode 16b vorgesehen, deren Basiskörpers 32 in eine Aufnahmehülse 25 mit einer Innenschulterfläche 25a eingesetzt ist. Eine solche Innenschulterfläche 25a kann auch bei den übrigen Ausgestaltungen des Beleuchtungskörpers bzw. des Sockels 17 vorgesehen sein.

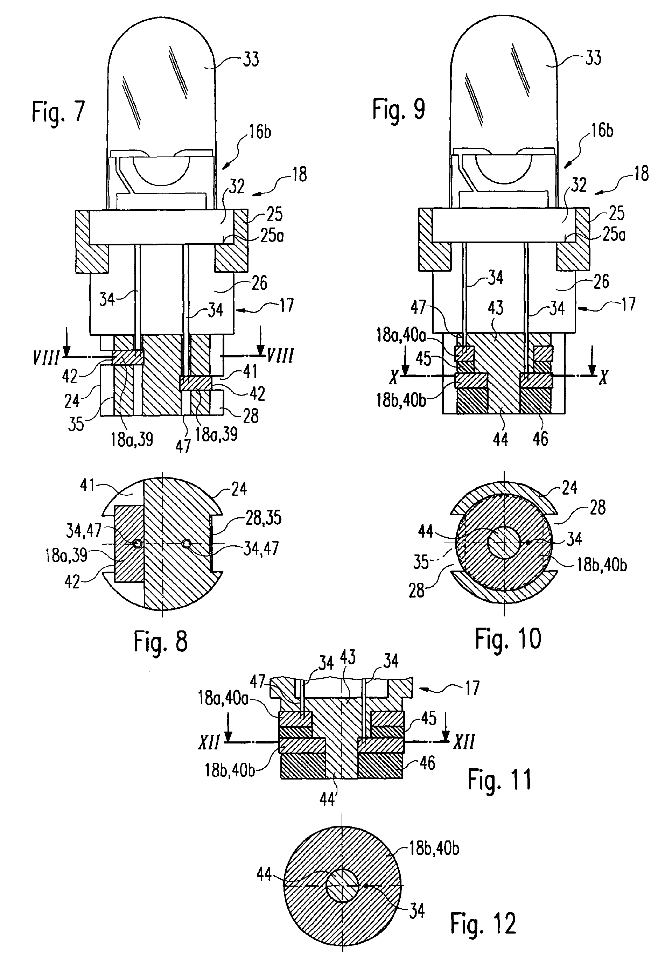

Bei den Ausführungsbeispielen nach Fig. 7 bis 12, bei denen ebenfalls gleiche Teile mit gleichen Bezugszeichen versehen sind, ist ein Steckzapfen 24 ohne Ausnehmung 27 vorgesehen. Außerdem sind die Leiterdrähte 34 der Leuchtdiode 16b jeweils mit einem Kontaktsegment 39 verbunden, das in einem quer zur Längsmittelachse des Steckzapfens 24 verlaufende Quernut 41 eingesetzt ist und mit seiner radialen Außenfläche eine Kontaktfläche 42 bildet, die sich in der Höhe der Grundfläche 35 befindet oder diese überragt. Die Kontaktsegmente 39 können einander direkt gegenüberliegend angeordnet sein oder sie können axial versetzt zueinander angeordnet sein, wie es Fig. 7 zeigt. Der elektrische Kontakt erfolgt mittels den Kontaktelementen 21a, 21b, die unterschiedlich lang ausgebildet sein können.

Das Ausführungsbeispiel nach Fig. 9 und 10, bei dem ebenfalls gleiche oder vergleichbare Teile mit gleichen Bezugszeichen versehen sind, unterscheidet sich vom Ausführungsbeispiel nach Fig. 7 dadurch, daß die Kontaktelemente 18a, 18b durch Kontaktringe 40a, 40b gebildet sind, die axial versetzt zueinander im Bereich des Steckzapfens 24 angeordnet sind, vorzugsweise auf zwei unterschiedlich groß bemessenen zylindrischen Haltezapfen 43,44, auf denen die Kontaktringe 40a, 40b sitzen und befestigt sind, z.B. durch dazwischen und davor aufgesetzte Isolierungs- oder Halterungsringe 45,46, die ebenfalls auf den Haltezapfen 43,44 sitzen oder auch durch Spritzgießen angeformt sein können. Auch beim Ausführungsbeispiel nach Fig. 8 sind die Längsnuten 28 vorgesehen, die ein Einstecken des Steckzapfens 24 jeweils in einer bestimmten Drehposition gewährleisten, da die Kontaktelemente 21a, 21b in die Längsnuten 28 eintauchen.

Beim Ausführungsbeispiel nach Fig. 11 und 12 sind die Kontaktelemente 18a, 18b ebenfalls durch Kontaktsegmente 39 oder durch Kontaktringe 40a, 40b gebildet, wobei jedoch die Längsnuten 28 fehlen und die Gegenkontaktelemente 21a, 21b einen größeren Abstand voneinander aufweisen und die Kontaktelemente 18a, 18b etwa an der Mantellinie des Steckzapfens 24 angeordnet sind. Bei dieser Ausgestaltung kann der Beleuchtungskörper 18 in jeder Drehstellung eingesteckt werden und kontaktieren.

Bei den Ausführungsbeispielen nach Fig. 7 bis 12 sind die Leiterdrähte 34 gegebenenfalls nur gekürzt und nicht mit weiteren Kontaktdrähten 36 verbunden, wobei im Steckzapfen 24 passende achsparallele Löcher 47 für die Leiterdrähte 34 vorgesehen sind. Dabei kann es sich beim Ausführungsbeispiel nach Fig. 7 und 8 um Durchgangslöcher und bei dem Ausführungsbeispiel nach Fig. 9 bis 12 um Sacklöcher handeln, die sich von innen bis zum zugehörigen Kontaktelement 18a, 18b erstrecken und auch im jeweiligen Kontaktelement 18a, 18b vorhanden sein können zwecks Verbindung mit den Kontaktelementen 18a, 18b.

Die vorbeschriebenen Ausbildungen der Steckzapfen 24 und Kontaktelemente 18a, 18b sind mit allen übrigen Ausgestaltungen des Beleuchtungskörpers 18 kombinierbar.

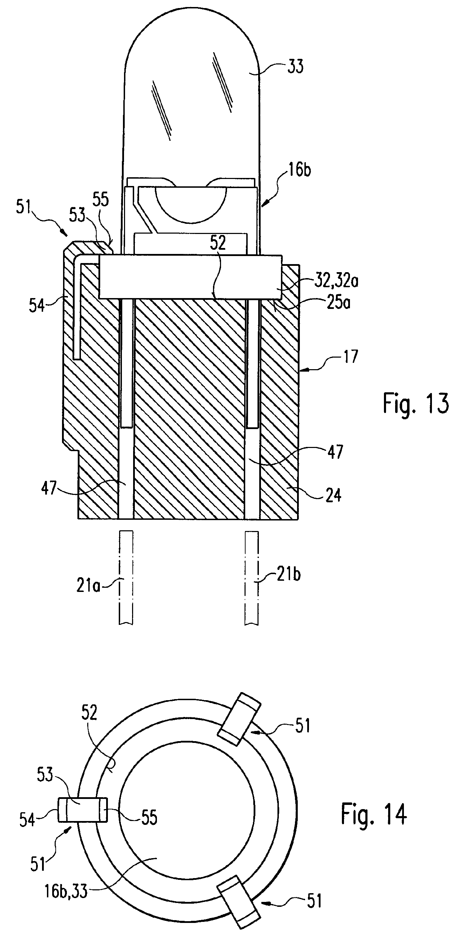

Beim Ausführungsbeispiel nach Fig. 13 und 14, bei dem gleiche oder vergleichbare Teile mit gleichen Bezugszeichen versehen sind, kommt eine Leuchtdiode 16b zum Einsatz, bei der es sich um eine handelsübliche Leuchtdiode handelt, deren Leiterdrähte 34 gegebenenfalls gekürzt sein können, wenn die Leuchtdiode 16b nicht bereits mit entsprechend kurzen Leiterdrähten 34 gefertigt wird. Bei dieser Ausgestaltung ist die Leuchtdiode 16b durch eine lösbare Verrastungsvorrichtung 51 mit dem Sockel 17 verbunden. Prinzipiell kann der Sockel 17 entsprechend dem Ausführungsbeispiel nach Fig. 11 ausgestaltet sein, jedoch kann der Freiraum 26 zwischen dem Steckzapfen 24 und der Aufnahmehülse 25 fehlen, so daß dieser Sockel 17 vollvolumig ausgebildet sein kann und die Hülse 25 und die Stufenfläche 25a durch eine vorderseitige Ausnehmung 52 für den Basiskörper 32 der Leuchtdiode 16b gebildet sind.

Zugehörige Gegenkontaktelemente 21a, 21b im Bereich des Steckzapfens 24 können z. B. durch vorzugsweise hülsenförmige Kontaktstifte gebildet sein, wie sie in Fig. 13 andeutungsweise dargestellt sind. Die Verrastungsvorrichtung 51 ist durch wenigstens eine Verrastungsnase 53 gebildet, die vom Sockel 17 nach vorne vorsteht und den Basiskörper 32 der Leuchtdiode 16b hintergreift. Die Verrastungsnase 53 ist an einem sich nach vorne erstreckenden Verbindungsarm 54 angeordnet und radial gegen eine elastische Rückstellkraft ausbiegbar, die durch die Eigenelastizität des Verbindungsarmes 54 erzeugt wird. Ferner weist die Verrastungsnase 53 eine schräge oder gerundete Einführungsfläche 55 auf, die ein selbsttätiges Ausweichen der Verrastungsnase 53 bewirkt, wenn die Leuchtdiode 16b mit ihrem Basiskörper 32 beim Montieren an den Sockel 17 gegen die Einführungsfläche 55 stößt. Durch manuelles Wegbiegen der Verrastungsnase 53 läßt sich die Verrastungsvorrichtung 51 lösen. Um die Elastizität zu vergrößern, erstreckt sich der Verbindungsarm 54 etwa parallel zur Mittelachse des Sockels 17 über dessen etwa halbe Länge, wobei er mit der Verrastungsnase 53 einen winkelförmigen Verrastungskörper bildet.

Zwecks Vergrößerung der Stabilität können mehrere Verrastungsvorrichtungen 51 vorgesehen sein, z. B. drei Stück, die auf dem Umfang des Sockels gleichmäßig verteilt sind, wie es Fig. 14 zeigt.

Der Sockel 17 und die Distanzhülse 29 bestehen vorzugsweise aus Kunststoff, wobei es sich um Kunststoff-Spritzgießteile handelt.

## Patentansprüche

1. Beleuchtungskörper (18) für ein medizinisches oder dentalmedizinisches Handstück (2), mit einer Lampe, die mit einem Sockel (17) eine vorfertigbare Baueinheit bildet, wobei die Lampe zwei Leiterdrähte (34) aufweist, die sich an zwei einander gegenüberliegenden Außenseiten des Sockels (17) befinden,
**dadurch gekennzeichnet**,
daß die Lampe durch eine Leuchtdiode (16; 16b) gebildet ist.

2. Beleuchtungskörper nach Anspruch 1,
**dadurch gekennzeichnet**,
daß der Sockel im Bereich der Leiterdrähte (34) einander gegenüberliegende Längsnuten (28) aufweist, an deren Grundflächen (35) sich die Leiterdrähte (34) befinden.

3. Beleuchtungskörper nach Anspruch 1 oder 2,
**dadurch gekennzeichnet**,
daß die Leuchtdiode (16; 16b) in einer vorderseitigen Ausnehmung (26;52) des Sockels (17) sitzt.

4. Beleuchtungskörper nach einem der vorherigen Ansprüche,
**dadurch gekennzeichnet**,
daß die Leuchtdiode eine handelsübliche Leuchtdiode (16b) oder eine bezüglich ihrer Querschnittsgröße spanabhebend angepaßte Leuchtdiode (16) gebildet ist.

5. Beleuchtungskörper nach einem der vorherigen Ansprüche,
**dadurch gekennzeichnet**,
daß zwischen der Leuchtdiode (16; 16b) und dem Sockel (17) eine Distanzhülse (29) angeordnet ist.

6. Beleuchtungskörper nach einem der vorherigen Ansprüche,
**dadurch gekennzeichnet**,
daß die Leiterdrähte (34) gekürzt sind und durch mit den gekürzten Leiterdrähten (34) elektrische leitend verbundene Kontaktdrähte (18) verlängert sind.

7. Beleuchtungskörper nach einem der vorherigen Ansprüche,
**dadurch gekennzeichnet**,
daß die Leiterdrähte (34) oder die Kontaktdrähte (18) am hinteren Ende des Sockels (17) radial nach innen umgebogen sind.

8. Beleuchtungskörper nach Anspruch 7,
**dadurch gekennzeichnet**,
daß die Leiterdrähte (34) oder die Kontaktdrähte (36) U-förmig umgebogen sind.

9. Beleuchtungskörper nach einem der vorherigen Ansprüche,
**dadurch gekennzeichnet**,
daß er mit dem Handstück (2) und einem Anschlußteil (3) ein Behandlungsinstrument bildet, wobei das Handstück (2) eine im Querschnitt runde Kupplungsausnehmung (7) aufweist, mit der das Handstück (2) auf einen vom Anschlußteil (3) vorragenden Kupplungszapfen (8) aufsteckbar ist, wobei der Kupplungszapfen (8) an seinem vorderen Ende zwei einen Querabstand voneinander aufweisende Gegenkontaktelemente (21a, 21b) aufweist, zwischen die der Beleuchtungskörper (18) mit seinen Leiterdrähten (34) eingesteckt ist, und wobei im Handstück (2) ein Lichtleiter (22) angeordnet ist, der sich von einer der Leuchtdiode (16) vorgeordneten Position bis zu einer Lichtaustrittsöffnung (15) im vorderen Bereich des Handstücks (2) erstreckt.

10. Verfahren zum Herstellen und Montieren eines Beleuchtungskörpers für ein medizinisches oder dentalmedizinisches Handstück (2) mit einem Sockel (17) und einer darin eingesetzten Lampe, mit folgendenden Verfahrensschritten:
Verwendung einer Leuchtdiode (16b) und Anpassen deren Querschnittsgröße an die Querschnittsgröße einer Ausnehmung des Sockels (17) durch spanabhebendes Abarbeiten.
Kürzen der Leiterdrähte (34) der Leuchtdiode (16b) auf eine Länge, die geringer ist als die Länge des Sockels (17).
Mit den Leiterdrähten (34) werden Kontaktdrähte (36) elektrisch leitend verbunden, die so lang sind, daß sie in der Montageposition das hintere Ende des Sockels (17) überragen.
Einsetzen und Befestigen einer Distanzhülse (29) in den Sockel (17).
Einsetzen der Leuchtdiode (16b) mit den verlängerten Kontaktdrähten (38) in die Distanzhülse (29).
Umbiegen der Enden der Kontaktdrähte (36) radial nach innen oder in eine U-förmige eine Innenwand des Sockels (17) hintergreifende Position.

11. Beleuchtungskörper (18) für ein medizinisches oder dentalmedizinisches Handstück (2), mit einer Lampe, die mit einem Sockel (17) eine vorfertigbare Baueinheit bildet, wobei die Lampe zwei Leiterdrähte (34) aufweist,
**dadurch gekennzeichnet**,
daß der Sockel (17) eine Verrastungsvorrichtung (51) aufweist und die Leuchtdiode (16b) durch die Verrastungsvorrichtung (51) am Sockel (17) gehalten ist.

12. Beleuchtungskörper nach Anspruch 11,
**dadurch gekennzeichnet**,
daß der Sockel (17) in seinem vorderen Endbereich eine Ausnehmung (52) aufweist, in der ein Basiskörper (32) der Leuchtdiode (16b) vorzugsweise von vorne eingeschoben ist.

13. Beleuchtungskörper nach Anspruch 11 oder 12,
**dadurch gekennzeichnet**,
daß die Verrastungsvorrichtung (51) wenigstens eine Verrastungsnase (53) aufweist, die eine vorzugsweise durch einen Ringansatz (32a) an der Leuchtdiode (16b) angeordnete Verrastungskante hintergreift und quer gegen eine elastische Rückstellkraft in eine Freigabestellung bewegbar ist.

14. Beleuchtungskörper nach Anspruch 13,
**dadurch gekennzeichnet**,
daß die Verrastungsnase (53) an einem sich etwa achsparallel erstreckenden Verbindungsarm (54) angeordnet ist, der quer elastisch ausbiegbar ist.

15. Beleuchtungskörper nach einem der vorherigen Ansprüche 11 bis 14,
**dadurch gekennzeichnet**,
daß zwei oder mehrere, vorzugsweise drei, einander gegenüberliegend angeordnete Verrastungsvorrichtungen (51) vorgesehen sind.

16. Beleuchtungskörper nach einem der vorherigen Ansprüche 11 bis 15,
**dadurch gekennzeichnet**,
daß die Leuchtdiode (16b) zwei einen Querabstand voneinander aufweisende Leiterdrähte (34) aufweist, die in eine gemeinsame Ausnehmung oder in etwa achsparallele Löcher (47) im Sockel (17) aufgenommen sind.
